# EUROPÄISCHE PATENTANMELDUNG

(11) **EP 3 598 521 A1**
(43) Veröffentlichungstag der Anmeldung: **22.01.2020**
(21) Anmeldenummer: 18184836.7
(22) Anmeldetag: 20.07.2018
(51) Int. Cl.: H01M 2/02, H01M 2/04, H01M 2/10, H01M 10/625, H01M 10/655, H01M 10/613, B60K 1/04

(54) **BATTERIETRÄGER UND FAHRZEUG MIT SOLCH EINEM BATTERIETRÄGER**

(71) Anmelder: voestalpine Metal Forming GmbH, 3500 Krems an der Donau (AT)
(72) Erfinder: Die Erfindernennung liegt noch nicht vor
(74) Vertreter: Jell, Friedrich

(57) **Zusammenfassung**

Es wird ein Batterieträger (1) gezeigt, mit einer Wanne (2), die mindestens eine Wannenseitenwand (2.1) und einen mit der Wannenseitenwand (2.1) verbundenen Wannenboden (2.2) aufweist, mit mehreren in der Wanne (2) vorgesehenen und an der Wanne (2) befestigten Tragprofilen (5.1, 5.2, 5.3, 5.4), mit mindestens einem Batteriepack (6), der an zumindest zwei, neben dem Batteriepack (6), insbesondere parallel zueinander, verlaufende Tragprofile (5.1, 5.2 bzw. 5.2, 5.2), insbesondere lösbar, befestigt ist, mit einem die Wanne (2) verschließbar ausgebildeten und mit dieser Wanne (2) lösbar verbundenen Deckel (3) und mit einem mit dem Batteriepack (6) in thermischem Verbund stehenden Wärmetauscher (7), der mindestens einen Strömungskanal (7.2) für eine Flüssigkeit (7.1) aufweist. Um konstruktive Einfachheit sowie eine einfache Montage und Wartung zu ermöglichen, wird vorgeschlagen, dass der Deckel (3) den Wärmetauscher (7) ausbildet, wobei der Batteriepack (6) mit Abstand (A) zum Wannenboden (2.2) angeordnet ist, welcher Wannenboden (2.2) mit der Wannenseitenwand (2.1) unlösbar verbunden oder mit diesem einteilig ausgebildet ist.

## Beschreibung

Die Erfindung betrifft einen Batterieträger mit einer Wanne, die mindestens eine Wannenseitenwand und einen mit der Wannenseitenwand verbundenen Wannenboden aufweist, mit mehreren in der Wanne vorgesehenen und an der Wanne befestigten Tragprofilen, mit mindestens einem Batteriepack, der an zumindest zwei, neben dem Batteriepack, insbesondere parallel zueinander, verlaufende Tragprofile, insbesondere lösbar, befestigt ist, mit einem die Wanne verschließbar ausgebildeten und mit dieser Wanne lösbar verbundenen Deckel und mit einem mit dem Batteriepack in thermischem Verbund stehenden Wärmetauscher, der mindestens einen Strömungskanal für eine Flüssigkeit aufweist.

Batterieträger zur Einhausung und zum Schutz einer Batterie bzw. deren elektrisch zusammengeschalteten Batteriepacks sind aus dem Stand der Technik bekannt (DE102016115647B3). Derartige Batterieträger bilden sich im Wesentlichen aus einer Wanne und einem, die Wanne verschließbar ausgebildeten und lösbar mit dieser verbundenen Deckel aus. Die in der Wanne vorgesehenen Batteriepacks werden oberhalb des Deckels mit Abstand zu diesem hängend vorgesehen, um diese Batteriepacks gegenüber plastischen Verformungen des Deckels, beispielsweise durch Steinschlag an der Unterseite eines Kraftfahrzeugs, zu schützen. Befestigt sind die Batteriepacks an Tragprofilen, welche - zu einer selbstragenden Rahmenstruktur verbunden - die Wannenseitenwand der Wanne ausbilden. Als Wannenboden ist ein Blech vorgesehen, das an die Rahmenstruktur fest anschließt und zudem in thermischem Verbund mit den Batteriepacks steht, um diese Batteriepacks zu temperieren bzw. zu kühlen oder zu heizen. Hierfür wird der Wannenboden mit einem Wärmeträger durchflossen, wofür dieser Wannenboden mehrere Strömungskanäle ausbildet.

Derartige Batterieträger sind vergleichsweise aufwendig herzustellen und zudem durch die hängende Anordnung der Batteriepacks in einer Wanne am Fahrzeugboden, deren Öffnung nach unten ausgerichtet ist, vergleichsweise wartungsunfreundlich. Dies insbesondere im Bereich des Wärmetauschers, welcher fest mit der Rahmenstruktur verbunden und im thermischen Verbund mit den Batteriepacks steht.

Die Erfindung hat sich daher die Aufgabe gestellt, einen Batterieträger der eingangs geschilderten Art derart konstruktiv zu verändern, dass dieser einfach und kostengünstig herzustellen als auch zu warten ist. Zudem soll der Batterieträger hohen mechanischen Belastungen standhalten können.

Die Erfindung löst die gestellte Aufgabe durch die Merkmale des Anspruchs 1.

Bildet der Deckel den Wärmetauscher aus, kann sich unter anderem eine vergleichsweise einfache Möglichkeit eröffnen, den Batteriepack zu prüfen - und zwar insbesondere auch im Bereich des Wärmeübergangs auf den Wärmetauscher. Die Wartung kann zudem selbst im befestigten Zustand des Batteriepacks in der Wanne durchgeführt werden, da der Batteriepack mit Abstand zum Wannenboden angeordnet und somit über den abgenommenen, von der Wanne gelösten, Deckel im Bereich der Wärmetauschflächen zugänglich ist.
Zudem ist die Montage des erfindungsgemäßen Batterieträgers mit einem, über seine Wannenöffnung eingebrachten und mit Abstand zum Wannenboden angeordneten Batteriepack erheblich einfacher, als dies der Stand der Technik ermöglicht.
Auch ist der erfindungsgemäße Batterieträger leichter zu warten, da von diesem im vom Fahrzeug demontierten Zustand lediglich der Deckel von der Wanne zu lösen ist, damit beispielsweise der Batteriepack für eine Prüfung, einen Austausch etc. zugänglich wird.
Durch die genannten Vorteile sind die Kosten zur Herstellung des Batterieträgers bzw. für dessen Wartung maßgeblich reduziert.
Durch die genannten Vorteile, vor allem aufgrund der vereinfachten Montage sowie Zugänglichkeit des Batteriepacks, kann ermöglicht werden, den Wannenboden mit der Wannenseitenwand unlösbar zu verbinden oder mit diesem einteilig auszubilden - womit am erfindungsgemäßen Batterieträger eine besonders hohe mechanische Belastbarkeit sicherzustellen ist, etwa, um den Batteriepack besonders gut zu schützen. Außerdem ist derart die Konstruktion des Batterieträgers erheblich vereinfachbar. Die genannte einteilige Ausbildung zusätzlich zur Dichtheit des Batterieträgers beitragen, da Schweißnähte oder andere Verbindungsarten hinfällig sind.

Wird die Wanne von einem umgeformten, vorzugsweise tiefgezogenen, Blech, insbesondere Stahlblech, ausgebildet, ist die Herstellung der Wanne noch weiter zu vereinfachen bzw. deren Standfestigkeit zu erhöhen.

Ist der Batteriepack in der Wanne mit Abstand A zum Wannenboden hängend angeordnet, kann durch diese Aufhängung beispielsweise die Montage des Batterieträgers weiter erleichtert werden. Zudem ist durch solch eine konstruktive Vereinfachung in der Befestigung des Batteriepacks auch die Wartung des Batteriepacks vereinfachbar.

Werden die Tragprofile von einem umgeformten Blech, insbesondere Stahlblech, ausgebildet, ist die Verwindungssteifigkeit der Wanne weiter erhöhbar. Des Weiteren können solche Tragprofile selbst bei hohen Trägheitskräften auf die Batteriepacks deren hängende Anordnung positionsgenau sicherstellen - was zur Erhöhung der Standfestigkeit des Batterieträgers beiträgt.

Sind die Tragprofile zu einer, insbesondere selbstragenden, Rahmenstruktur verbunden, welche Rahmenstruktur an der Wanne befestigt ist, insbesondere mit der Wanne unlösbar verbunden, kann sich zusätzlich die Herstellung des Batterieträgers vereinfachen.

Die Dauerfestigkeit am Batterieträger ist weiter erhöhbar, wenn die Rahmenstruktur mit der Wannenseitenwand und/oder mit dem Wannenboden unlösbar verbunden ist. Die mechanische Belastbarkeit des Batterieträgers kann weiter erhöht werden, wenn erste Tragprofile als Querträger in der Wanne vorgesehen sind. Dies vor allem auch, wenn die Querträger mit dem Wannenboden unlösbar verbunden sind.

Beispielsweise kann die elektrische Verschaltung des Batteriepacks erleichtert werden, wenn zweite Tragprofile als Längsträger in der Wanne vorgesehen sind, welche Längsträger unterhalb der Oberkanten der Querträger in der Wanne angeordnet sind. Der dadurch entstehende Höhenunterschied erleichtert beispielsweise die Verlegung einer elektrischen Verbindung. Auch kann sich dadurch die Möglichkeit eröffnen, die Pole des Batteriepacks quer zum Batterieträger vorzusehen - was platzsparend eine elektrische Verbindungsmöglichkeit erlauben kann.
Vorzugsweise sind diese Querträger mehr als doppelt so hoch wie die Längsträger. Beispielsweise sind die Längsträger an den Querträgern befestigt, vorzugsweise mit diesen unlösbar verbunden.

Unter anderem das Crashverhalten des Batterieträgers ist verbesserbar, wenn dritte Tragprofile als Seitenträger in der Wanne und an die Wannenseitenwand anschließend vorgesehen sind. Zudem können diese Seitenträger die Montage der anderen Tragprofile in der Wanne erleichtern. Vorzugsweise sind die Seitenträger mit der Wannenseitenwand und/oder mit dem Wannenboden unlösbar verbunden, was zur Erhöhung der Festigkeit des Batterieträgers beitragen kann.

Verlaufen, insbesondere alle, Querträger von einem Seitenträger zu dessen anderen, gegenüberliegenden Seitenträger durchgehend, kann dies im Batterieträger nicht nur eine Versteifung, sondern auch gleiche Befestigungsvoraussetzungen für weitere Batteriepacks ergeben bzw. deren Montage erleichtern.

Bilden Querträger, Längsträger und Seitenträger die Rahmenstruktur aus, ist die Herstellung des Batterieträgers weiter vereinfachbar, da solch eine Rahmenstruktur einfach in die Wanne einsetzbar und mit dieser verbindbar ist. Diesbezüglich können unlösbare Verbindungen zu Vorteilen hinsichtlich der Dauerfestigkeit am Batterieträger führen.

Die Konstruktion des Batterieträgers ist weiter zu vereinfachen, wenn Tragprofile im Querschnitt hutförmig oder als geschlossene Holprofile ausgebildet sind. Zudem kann eine derartige Profilform besonders einfach mit dem Wannenboden unlösbar verbunden, beispielsweise verschweißt, werden.

Vereinfachte Montagebedingungen am Batterieträger sind erreichbar, wenn der Batteriepack seitlich abstehende Flansche aufweist, die auf den Tragprofilen aufliegen und über welche der Batteriepack an den Tragprofilen befestigt ist. Beispielsweise können sich hier als Tragprofile die Querträger uns Seitenträger, auszeichnen.

Verspannt der Deckel den hängenden Batteriepack im Batterieträger, kann dies neben der Sicherung der Lage des Batteriepacks in der Wanne auch dafür sorgen, dass der Wärmewiderstand im thermischen Verbund zwischen Batteriepack und dem Deckel als Wärmetauscher gering ist. Die Temperierung des Batteriepacks kann damit vergleichsweise genau und effektiv erfolgen - was wiederum zu einer langen Lebensdauer des Batteriepacks beiträgt.

Das Verspannen des hängenden Batteriepacks durch den Deckel kann konstruktiv einfach ermöglicht werden, wenn der Deckel unter Vorspannung am Batteriepack, gegebenenfalls über ein thermisches Kontaktelement, insbesondere über eine Wärmeleitfolie oder ein Wärmeleitpad, anliegt.

Weist die Wanne einen an die Wannenseitenwand anschließenden, umlaufenden Wannenflansch auf, mit welchem der Deckel lösbar verbindbar ausgebildet ist, kann eine einfache und gegenüber Witterungseinflüssen standfeste Kapselung des Batteriepacks durch den Batterieträger erreicht werden. Mit einer besonders hohen Standfestigkeit des Batteriepacks ist somit zu rechnen.

Konstruktiv einfach gelöst, kann der Deckel mindestens zwei miteinander verbundene Bleche aufweisen, die zwischen einander den Strömungskanal ausbilden. Zusätzlich kann der Strömungskanal zwischen den Blechen auch die Verwindungssteifigkeit des Deckels erhöhen. Auch mit einer verbesserten Standfestigkeit des Batterieträgers ist derart zu rechnen.

Insbesondere kann sich der erfindungsgemäße Batterieträger bei einem Fahrzeug auszeichnen, wenn der Batterieträger unterhalb des Karosseriebodens des Fahrzeugs mit seinem Deckel dem Karosserieboden zugewandt angeordnet ist.

In den Figuren ist beispielsweise der Erfindungsgegenstand anhand einer Ausführungsvariante näher dargestellt. Es zeigen
Fig. 1 eine aufgerissene Seitenansicht auf einen Batterieträger und
Fig. 2 eine Draufsicht auf den Batterieträger mit abgenommenen Deckel.

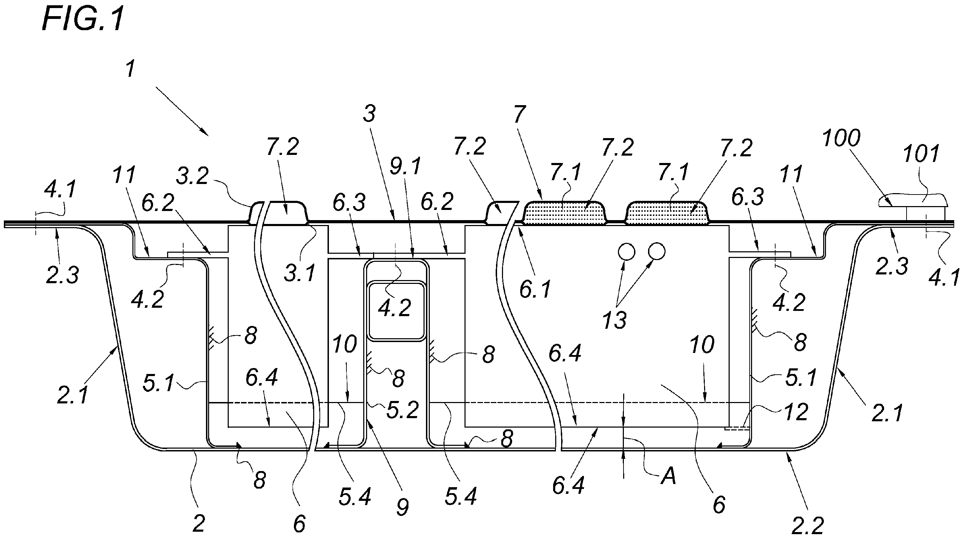

Nach Fig. 1 wird beispielsweise ein Batterieträger 1 mit einer Wanne 2 und mit einem die Wanne 2 verschließenden Deckel 3 dargestellt. Dieser Deckel 3 ist mit der Wanne 2 über angedeutet dargestellte erste Schraubverbindungen 4.1 lösbar verbundenen. Die Wanne 2 weist eine Wannenseitenwand 2.1 und einen mit der Wannenseitenwand 2.1 verbundenen Wannenboden 2.2 auf.

In der Wanne 2 sind mehrere Tragprofile 5.1, 5.2, 5.3, 5.4 vorgesehen, die an der Wanne befestigt sind. Zudem weist der Batterieträger 1 mehrere Batteriepacks 6 auf, neben denen die Tragprofile 5.1, 5.2, 5.3, 5.4 verlaufen. Dies Batteriepacks 6 werden über nicht näher dargestellte elektrische Verbindungen zu einer Batterie elektrisch zusammengeschaltet. Die Batteriepacks 6 weisen vorzugsweise Lithium-Ionen-Zellen auf. Bekanntermaßen wird unter einem Batteriepack 6 ein zusammengeschaltetes Paket von mehreren Batteriezellen verstanden, welche Batteriezellen vorzugsweise von einem Gehäuse umgeben sind. Das Batteriepack 6 weist elektrische Pole 13 zum elektrischen Anschluss auf.

Es ist erkennbar, dass ein Batteriepack 6 jeweils an zwei, parallel zueinander bzw. an unterschiedlichen seiner - im Ausführungsbeispiel einander gegenüberliegenden - Seiten angeordneten Tragprofilen 5.1, 5.2 bzw. 5.2, 5.2 lösbar befestigt ist.

Zudem weist der Batterieträger 1 einen Wärmetauscher 7 auf, der mit dem Batteriepack 6 in thermischem Verbund steht und damit dieses Batteriepack 6 entsprechend den jeweiligen Anforderungen temperieren bzw. kühlen oder erwärmen kann. Zu diesem Zweck durchströmt den Wärmetauscher 7 eine Flüssigkeit 7.1 - und zwar strömt diese Flüssigkeit 7.1 durch Strömungskanäle 7.2 im Wärmetauscher 7.

Erfindungsgemäß wird die Konstruktion des Batterieträgers 1 erheblich gegenüber anderen aus dem Stand der Technik bekannten Batterieträgern 1 verbessert, indem der Deckel 3 den Wärmetauscher 7 ausbildet - wie in Fig. 1 erkennbar.
Zudem kann - der einfacheren Montage und Wartung halber - der lösbar mit der Wanne 2 verbundene Deckel 3 auch über die erste Schraubverbindungen 4.1 handhabungsfreundlich entfernt und damit ein Zugang zu den Batteriepacks 6 eröffnet werden.

Da die Batteriepacks 6 mit Abstand A zum Wannenboden 2.2 angeordnet sind, sind diese an ihrer oberen Batteriepackseite 6.1 ebenso einfach zugänglich. Dies erleichtert unter anderem Montage-, Prüfungs- und Wartungsarbeiten der Batteriepacks 6, beispielsweise auch deren Austausch bei Defekt.
Außerdem stellt der Abstand A von der Batteriepackunterseite 6.4, welche dem Wannenboden 2.2 zugewandt ist, sicher, dass die Batteriepacks 6 gegenüber mechanischen Deformationen der Wanne 2 erheblich besser geschützt sind.
Hierzu ist es möglich, dass die Batteriepacks 6 mit Abstand A in der Wanne 2 hängend, insbesondere frei hängend, vorgesehen sind.
Es ist aber auch vorstellbar, dass mindestens ein Batteriepack 6 auf eine am Tragprofil 5.1, 5.2 befestigten Stütze 12 anliegt, beispielsweise mit seiner Batteriepackunterseite 6.4 auf der Stütze 12 aufsteht, was strichliert in Fig. 1 dargestellt ist. Die Stütze 12 kann beispielsweise die Aufhängung des Batteriepacks 6 entlasten.

Der erfindungsgemäße Batterieträger 1 ist auch mechanisch besonders steif ausgebildet - wofür die Wanne 2, also Wannenboden 2.2 und Wannenseitenwände 2.1 einteilig ausgebildet ist, wie in der Figur 1 dargestellt - oder wofür Wannenboden 2.2 und Wannenseitenwände 2.1 unlösbar miteinander verbunden sind.
Hierfür eignet sich besonders ein umgeformtes - und zwar tiefgezogenes - Blech, nämlich Stahlblech. Im mechanischen Verbund mit den an der Wanne 2 befestigten Tragprofilen 5.1, 5.2, 5.3, 5.4 ergibt sich am Batterieträger 1 beispielsweise eine hohe Verwindungssteifigkeit und Beulsteife, womit die Batteriepacks 6 - auch bei hohen mechanischen Belastungen - geschützt gelagert sind.

Konstruktiv einfach und hoch belastbar ist der Verbund zwischen Wanne 2 und Tragprofilen 5.1, 5.2, 5.3, 5.4 beispielsweise über stoffschlüssige Verbindungen ausgeführt. So sind die Tragprofile 5.1, 5.2, 5.3, 5.4 jeweils sowohl mit der Wannenseitenwand 2.1 als auch mit Wannenboden 2.2 unlösbar verbunden, nämlich über Schweißnähte 8 - wie in Fig. 1 zu erkennen. Des Weiteren sind Tragprofile 5.1 und 5.2 miteinander fest verbunden, was zu einer Rahmenstruktur 14 mit hoher Festigkeit und Steifigkeit führt.

Diese feste Verbindung ist zudem einfach herstellbar, weil die Tragprofilen 5.1, 5.2, 5.3, 5.4 von einem umgeformten Blech, nämlich Stahlblech, ausgebildet werden.

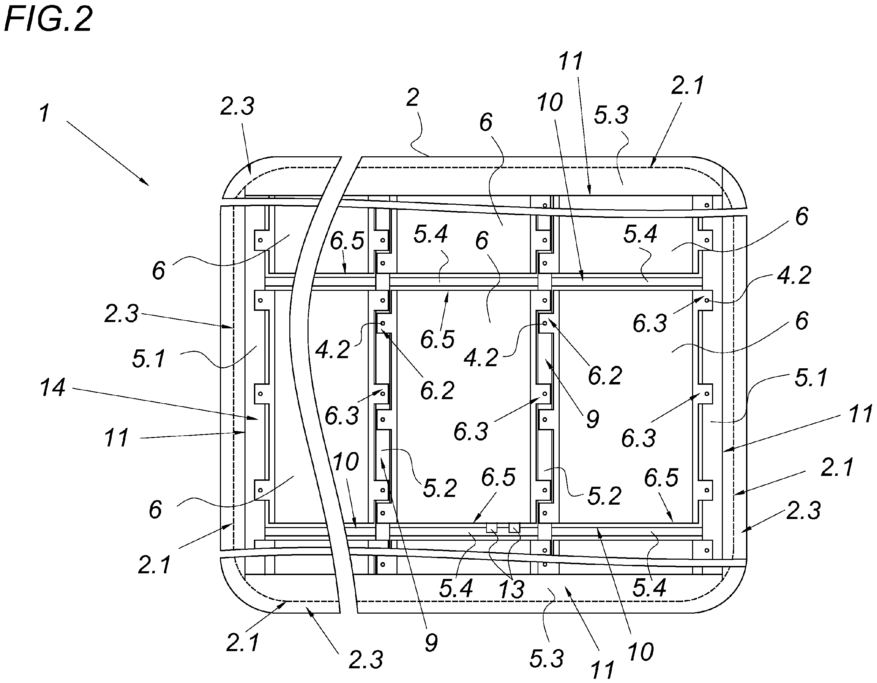

Wie der Fig. 2 zu entnehmen, sind die ersten Tragprofile 5.2 als Querträger 9 in der Wanne 2 vorgesehen. Dies führt zu einer mechanisch belastbaren Rahmenstruktur 14, was die Batteriepacks 6 vor Beschädigungen schützt. Die von den am Batterieträger 1 querseitigen Seitenwänden 2.1 beabstandeten Tragprofile 5.2 sind im Querschnitt hutförmig ausgebildet, und mit ihren Flanschen mit dem Wannenboden 2.2 als auch mit den Tragprofilen 5.3 fest verbunden - was die Konstruktion des Batterieträgers 1 vereinfacht und zudem für eine hohe mechanische Belastbarkeit sorgt. Vorstellbar, jedoch nicht gezeigt, ist, dass Tragprofile 5.2 im Querschnitt als geschlossene Holprofile ausgebildet sind.

Wie anhand der Figuren 1 und 2 erkennbar, sind zweite Tragprofile 5.4 als Längsträger 10 in der Wanne 2 vorgesehen. Die Längsträger 10 sind mit den ersten Tragprofilen 5.2 fest, insbesondere unlösbar, verbunden - beispielsweise verschweißt. Zudem sind diese Längsträger 10 niedriger als die Querträger 9, und damit unterhalb der Oberkanten 9.1 der Querträger 9 in der Wanne 2 angeordnet. Damit können die Batteriepacks 6 handhabungsfreundlich über nicht dargestellte elektrische Verbindungen zusammengeschaltet werden. Außerdem entsteht damit eine Zugänglichkeit zu mindestens einem Pol 13, insbesondere beiden Polen 13, des Batteriepacks 6, welcher Pol 13 bzw. welche Pole 13 auf einer oder auf beiden Schmalseiten 6.5 des Batteriepacks 6 vorgesehen sind - wie der Fig. 1 anhand eines Batteriepacks 6 als Beispiel für alle Batteriepacks 6 entnommen werden kann.

In der Wanne 2 sind zudem dritte Tragprofile 5.1, 5.3 als Seitenträger 11 in der Wanne 2 vorgesehen. Diese Seitenträger 11 schließen an die Wannenseitenwand 2.1 an und sind mit dieser unlösbar verbunden bzw. verschweißt.

Die Querträger 9, als auch die Längsträger 10 sind jeweils mit einander gegenüberliegenden Seitenträgern 11 unlösbar verbunden. Die Querträger 9 verlaufen von einem Seitenträger 11 zum anderen Seitenträger 11 durchgehend und sind an diese Seitenträger 11 befestigt, vorzugsweise unlösbar mit diesen verbunden.

Somit bilden Querträger 9, Längsträger 10 und Seitenträger 11 eine Rahmenstruktur 14 in der Wanne 2 aus. Dies kann unter anderem für eine hohe Verwindungssteifigkeit zum Schutz der Batteriemodule 6 sorgen. Die Längsträger 10 befinden sich je zwischen den zwei Querträgern 9 bzw. zwischen Querträger 9 und Seitenträger 11, wie dies nach Fig. 2 entnommen werden kann.

Die lösbare Verbindung des Batteriepacks 6 mit dem Tragprofilen 5.1, 5.2, 5.3 erfolgt über, dem Batteriepack 6 seitlich abstehende Flansche 6.2, 6.3, welche auf den jeweiligen Tragprofilen 5.1, 5.2 aufliegen und von zweiten Schraubverbindungen 4.2 an den Tragprofilen 5.1, 5.2 gehalten werden. Im Allgemeinen wird erwähnt, dass alternativ zur ersten und zweiten Schraubverbindungen 4.1, 4.2 auch andere lösbare Verbindungen vorstellbar sind.
Hinsichtlich der Standfestigkeit der erfindungsgemäßen Vorrichtung hat sich zudem als vorteilhaft herausgestellt, wenn im Bereich des Übergangs der Flansche 6.2, 6.3 in die Wannenseitenwand 2.1, an der Außenseite der Wanne 2 ein Außenrahmen vorgesehen ist - welcher allerdings nicht dargestellt ist.

Die Batteriepacks 6 sind im je an zwei Querträgern 9 befestigt oder an einem Querträger 9 und einem Seitenträger 11 befestigt. Die Batteriepacks 6 sind Teile einer Batterie.

Der Wärmewiderstand zwischen Deckel 3 bzw. Wärmetauscher 7 und den Batteriepacks 6 wird gering gehalten, indem der Deckel 3 den hängende Batteriepack 6 im Batterieträger 1 verspannt. Der Deckel 3 liegt hierfür unter Vorspannung am Batteriepack 6 über ein zwischen Deckel 3 und Batteriepack 6 vorgesehenes thermisches Kontaktelement an. Das Kontaktelement - in der Fig. 1 nicht dargestellt - kann beispielsweise eine Wärmeleitpaste sein.
Die Vorspannung wird über die erste lösbare Schraubverbindung 4.1 auf den Deckel 3 aufgebracht. Diese lösbare Schraubverbindung 4.1 spannt hierfür den Deckel 3 an einen umlaufenden Wannenflansch 2.3 der Wanne 2, die an die Wannenseitenwand 2.1 anschließt und den Rand der Wanne 2 ausbildet.

Der Wärmetauscher 7 wird von zwei aneinander anliegenden und miteinander verbundenen Blechen 3.1, 3.2 ausgebildet. Beide Blech 3.1, 3.2 weist hierfür Sicken 3.3 auf, wodurch sich zwischen den Blechen 3.1, 3.2 die Strömungskanäle 7.2 des Wärmetauschers 7 ausbilden. Zudem verstärken diese Sicken die mechanische Steifigkeit des Deckels 3, was wiederum die Standfestigkeit des Batterieträgers 1 erhöht. Das innere, der Wanne zugewandte Blech 3.1 liegt mit seinen Sicken 3.3 auf mindestens einem Batteriepack 6, insbesondere auf den Batteriepacks 6, auf.

Wie zudem der Fig. 1 zu entnehmen, ist der Batterieträger 1 andeutungsweise an einem Kraftfahrzeug 100 montiert und zwar unterhalb des Karosseriebodens 101, wobei der Deckel 3 des Batterieträgers 1 dem Karosserieboden 101 zugewandt angeordnet ist.

## Patentansprüche

1. Batterieträger mit einer Wanne (2), die mindestens eine Wannenseitenwand (2.1) und einen mit der Wannenseitenwand (2.1) verbundenen Wannenboden (2.2) aufweist, mit mehreren in der Wanne (2) vorgesehenen und an der Wanne (2) befestigten Tragprofilen (5.1, 5.2, 5.3, 5.4), mit mindestens einem Batteriepack (6), der an zumindest zwei, neben dem Batteriepack (6), insbesondere parallel zueinander, verlaufende Tragprofile (5.1, 5.2 bzw. 5.2, 5.2), insbesondere lösbar, befestigt ist, mit einem die Wanne (2) verschließbar ausgebildeten und mit dieser Wanne (2) lösbar verbundenen Deckel (3) und mit einem mit dem Batteriepack (6) in thermischem Verbund stehenden Wärmetauscher (7), der mindestens einen Strömungskanal (7.2) für eine Flüssigkeit (7.1) aufweist, **dadurch gekennzeichnet, dass** der Deckel (3) den Wärmetauscher (7) ausbildet, wobei der Batteriepack (6) mit Abstand (A) zum Wannenboden (2.2) angeordnet ist, welcher Wannenboden (2.2) mit der Wannenseitenwand (2.1) unlösbar verbunden oder mit diesem einteilig ausgebildet ist.

2. Batterieträger nach Anspruch 1, **dadurch gekennzeichnet, dass** die Wanne (2) von einem umgeformten, vorzugsweise tiefgezogenen, Blech, insbesondere Stahlblech, ausgebildet wird.

3. Batterieträger nach Anspruch 1 oder 2, **dadurch gekennzeichnet, dass** der Batteriepack (6) in der Wanne (2) mit Abstand (A) zum Wannenboden (2.2) hängend angeordnet ist.

4. Batterieträger nach einem der Ansprüche 1 bis 3, **dadurch gekennzeichnet, dass** die Tragprofile (5.1, 5.2, 5.3, 5.4) von einem umgeformten Blech, insbesondere Stahlblech, ausgebildet werden.

5. Batterieträger nach einem der Ansprüche 1 bis 4, **dadurch gekennzeichnet, dass** die Tragprofile (5.1, 5.2, 5.3, 5.4) zu einer, insbesondere selbstragenden, Rahmenstruktur (14) verbunden sind, welche Rahmenstruktur (14) an der Wanne (2) befestigt, insbesondere mit der Wanne (2) unlösbar verbunden, ist.

6. Batterieträger nach Anspruch 5, **dadurch gekennzeichnet, dass** die Rahmenstruktur (14) mit der Wannenseitenwand (2.1) und/oder mit dem Wannenboden (2.2) unlösbar verbunden ist.

7. Batterieträger nach einem der Ansprüche 1 bis 6, **dadurch gekennzeichnet, dass** erste Tragprofile (5.2) als Querträger (9) in der Wanne (2) vorgesehen sind, die insbesondere mit dem Wannenboden (2.2) unlösbar verbunden sind.

8. Batterieträger nach einem der Ansprüche 1 bis 7, **dadurch gekennzeichnet, dass** zweite Tragprofile (5.4) als Längsträger (10) in der Wanne (2) vorgesehen sind, welche Längsträger (10) unterhalb der Oberkanten (9.1) der Querträger (9) in der Wanne (2) angeordnet sind.

9. Batterieträger nach einem der Ansprüche 1 bis 8, **dadurch gekennzeichnet, dass** dritte Tragprofile (5.1, 5.3) als Seitenträger (11) in der Wanne (2) und an die Wannenseitenwand (2.1) anschließend vorgesehen sind, die insbesondere mit der Wannenseitenwand (2.1) und/oder mit dem Wannenboden (2.2) unlösbar verbunden sind.

10. Batterieträger nach Anspruch 9, **dadurch gekennzeichnet, dass** Querträger (9) von einem Seitenträger (11) zu dessen gegenüberliegenden Seitenträger (11) durchgehend verlaufen.

11. Batterieträger nach einem der Ansprüche 5 bis 10, **dadurch gekennzeichnet, dass** Querträger (9), Längsträger (10) und Seitenträger (11) die Rahmenstruktur (14) ausbilden.

12. Batterieträger nach einem, der Ansprüche 1 bis 11, **dadurch gekennzeichnet, dass** Tragprofile (5.2) im Querschnitt hutförmig oder als geschlossene Holprofile ausgebildet sind.

13. Batterieträger nach einem der Ansprüche 1 bis 12, **dadurch gekennzeichnet, dass** der Batteriepack (6) seitlich abstehende Flansche (6.2, 6.3) aufweist, die auf den Tragprofilen (5.1, 5.2, 5.3), aufliegen und über welche der Batteriepack (6) an Tragprofilen (5.1, 5.2, 5.3) befestigt ist.

14. Batterieträger nach einem der Ansprüche 1 bis 13, **dadurch gekennzeichnet, dass** der Deckel (3) den hängenden Batteriepack (6) im Batterieträger (1) verspannt.

15. Batterieträger nach einem Anspruch 14, **dadurch gekennzeichnet, dass** der Deckel (3) unter Vorspannung am Batteriepack (6), gegebenenfalls über ein thermisches Kontaktelement, insbesondere über eine Wärmeleitfolie oder ein Wärmeleitpad, anliegt.

16. Batterieträger nach einem der Ansprüche 1 bis 15, **dadurch gekennzeichnet, dass** die Wanne (2) einen an die Wannenseitenwand (2.1) anschließenden, umlaufenden Wannenflansch (2.3) aufweist, mit welchem der Deckel (3) lösbar verbindbar ausgebildet ist.

17. Batterieträger nach einem der Ansprüche 1 bis 16, **dadurch gekennzeichnet, dass** der Deckel (3) mindestens zwei miteinander verbundene Bleche (3.1, 3.2) aufweist, die zwischen einander den Strömungskanal (7.2) ausbilden.

18. Fahrzeug mit einem Karosserieboden (101) und mit einem Batterieträger (1) nach einem der Ansprüche 1 bis 17, **dadurch gekennzeichnet, dass** der Batterieträger (1) unterhalb des Karosseriebodens (101) mit seinem Deckel (3) dem Karosserieboden (101) zugewandt angeordnet ist.
